# EUROPEAN PATENT SPECIFICATION

(11) **EP 4 239 272 B1**
(45) Date of publication and mention of the grant of the patent: **05.11.2025**
(21) Application number: 22382190.1
(22) Date of filing: 02.03.2022
(51) Int. Cl.: F28D 20/02, F28D 20/00, F28F 27/02

(54) **MODULAR THERMAL ENERGY STORAGE SYSTEM AND ASSOCIATED METHOD**
MODULARES THERMISCHES ENERGIESPEICHERSYSTEM UND ZUGEHÖRIGES VERFAHREN
SYSTÈME DE STOCKAGE D'ÉNERGIE THERMIQUE MODULAIRE ET PROCÉDÉ ASSOCIÉ

(43) Date of publication of application: 06.09.2023
(73) Proprietor: Greendur Technologies S.L., 31110 Noain (ES)
(72) Inventor: CASTILLO, Jesús, 31154 NAVARRA (ES)
(74) Representative: Galbaian S.Coop.

(56) References cited:
- CN-A- 110 986 398
- FR-A1- 2 579 312
- FR-A1- 3 103 541
- US-B2- 9 970 715

## Description

### TECHNICAL FIELD

The present invention relates to modular thermal energy storage systems and their associated methods.

### PRIOR ART

Modular thermal energy storage systems are known. They are used for storing and subsequently delivering thermal energy. The thermal energy provided by these systems can be used directly or be transformed into electric energy by means of a turbine and generator mechanism. Today, thermal energy storage systems are often used for storing thermal energy produced in photovoltaic plants, organic waste treatment plants, etc., and for subsequently releasing it at a given time in order to satisfy or supplement a thermal or electric energy demand, or for other purposes such as generating steam to be used in the agricultural sector, for example. The main advantages obtained by means of thermal storage are summarized as follows: improvement in the capacity to manage the energy produced allowing, for example, in the case of a photovoltaic plant, electricity to be produced beyond daylight hours, and therefore allowing electricity to be supplied on demand; prevention of fluctuations associated with a solar resource which depends on weather conditions; and reduction of the amount of excess energy, thereby achieving greater installation efficiency.

US20190072338A1 describes a thermal energy storage system having a plurality of thermal energy storage modules. Each of the modules has a plurality of thermally conductive tubes containing a thermal energy storage medium. The tubes are sealed and separated from one another, such that heat transfer fluid can flow between them. The system comprises a flow control system which is operatively connected to a flow distributor, which is suitable for receiving heat transfer fluid and distributing it in a controlled manner to the set of thermal energy storage modules. The system flow distributor comprises a plurality of control valves controlled by the flow control system, allowing the heat transfer fluid to pass through or preventing said heat transfer fluid from passing through to each of the modules. The system allows an efficient transfer of thermal energy to and from the system and is capable of providing the desired output temperature and flow rate in the outlet port.

US9970715B2 discloses a thermal energy store comprising a chamber with a gas inlet and a gas outlet and a plurality of successive downstream gas-permeable thermal storage layers disposed therebetween, each layer comprising gas-permeable thermal storage media, the store being configured so that gas flow from the gas inlet to the gas outlet passes through the layers to transfer thermal energy to or from the thermal storage media. At least one of the layers is a valved layer provided with at least one valve selectively operable to allow or prevent gas flow through that layer through the valve to bypass the thermal storage media. A control system can selectively alter the flow path of the gas flowing from inlet to outlet in response to the progress of a thermal front, to bypass thermal storage layers.

FR3103541A1 discloses a heat storage device comprising at least two storage stages, each stage comprising a first volume and a second volume separated by a bed of adsorbent material. The first volumes of the storage stages are interconnected by first pipes, and the second volumes of the storage stages are interconnected by second pipes. The first and/or second pipes are equipped with valves. In this way, a fluid can pass from one volume to another by crossing the bed of adsorbent material over a short period of time. As it passes through the bed, an adsorption/desorption phenomenon takes place, making it possible to generate heat or store it.

### DISCLOSURE OF THE INVENTION

The object of the invention is to provide a modular thermal energy storage system, as defined in the claims.

The modular thermal energy storage system of the invention comprises a plurality of thermal energy storage modules which are coupled to one another in series and configured for a heat transfer fluid to flow sequentially along said modules. Each module has two operating modes, a first thermal energy transmission mode in which a transfer of thermal energy occurs between the heat transfer fluid and the module when the heat transfer fluid flows along said module, and a second non-thermal energy transmission mode in which the transfer of thermal energy does not occur between the heat transfer fluid and the module when the heat transfer fluid flows along said module.

Each module comprises a flow distribution unit and a main body, the main body comprising a thermal energy storage area in which a thermal energy storage medium is housed, and a pass-through area configured for allowing the heat transfer fluid to pass through the module without thermal energy being transmitted between the heat transfer fluid and the module, and the flow distribution unit being configured for allowing the heat transfer fluid to pass through to the thermal energy storage area, the pass-through area, or both.

The flow distribution unit comprises a first shutter and a first actuator configured for moving the first shutter between a pass-through position in which the first shutter allows the heat transfer fluid to pass through to the storage area and a closed position in which the first shutter prevents the heat transfer fluid from passing through to the storage area, and a second shutter and a second actuator which is configured for moving the second shutter between a pass-through position in which the second shutter allows the heat transfer fluid to pass through to the pass-through area and a closed position in which the second shutter prevents the heat transfer fluid from passing through to the pass-through area.

The first shutter and the second shutter can be arranged, in addition to in the pass-through position and in the closed position, in intermediate positions between said pass-through position and said closed position, such that the first actuator and the second actuator can regulate the amount of heat transfer fluid passing through the first shutter with respect to the amount of heat transfer fluid passing through the second shutter during a predetermined period of time. The thermal energy storage medium is made of a material from those materials known as phase change materials or PCMs.

A thermal energy storage method in a modular thermal energy storage system comprising a plurality of thermal energy storage modules is also provided, the modules being coupled to one another in series, and the modules being configured for a heat transfer fluid to flow sequentially along said modules. In the thermal energy storage modules, a thermal energy storage medium made of a material from those materials known as phase change materials or PCMs is housed. In the method, an operating mode of each module is selected from two possible operating modes, a first thermal energy transmission mode in which a transfer of thermal energy occurs between the heat transfer fluid and the module when the heat transfer fluid flows along the module, and a second non-thermal energy transmission mode in which the transfer of thermal energy does not occur between the heat transfer fluid and the module when the heat transfer fluid flows along said module.

In the method, for each module operating in the first thermal energy transmission mode, the amount of heat transfer fluid transferring thermal energy to the module is selected.

The modular system and the thermal energy storage method of the invention can be adapted to the heat capacity of the heat transfer fluid at all times, thereby optimizing system efficiency. The greater the heat capacity of the heat transfer fluid, the larger the number of modules through which said heat transfer fluid will flow in the first thermal energy transmission mode will be, and the lower the heat capacity of the heat transfer fluid, the smaller the number of modules through which said heat transfer fluid will flow in the first thermal energy transmission mode will be. The modular system and the thermal energy storage method of the invention can also be adapted to the state of each of the modules, such that when a module can no longer store more thermal energy, said module will transition to the second non-thermal energy transmission mode, whereas another module of the modular system with the capacity to store more thermal energy would transition from the second non-thermal energy transmission mode to the first thermal energy transmission mode.

Furthermore, although the heat transfer fluid flows along all the modules of the system, only those modules which are operating in the first thermal energy transmission mode provide resistance against the passing through of said fluid, such that the pressure drop in the heat transfer fluid as it goes through the modular system of the invention is lower than that offered by other modular thermal energy storage systems known in the state of the art.

These and other advantages and features of the invention will become apparent in view of the figures and detailed description of the invention.

### DESCRIPTION OF THE DRAWINGS

Figure 1 shows a perspective view of an embodiment of the modular thermal energy storage system according to the invention.
Figure 2 shows a sectional view of the modular system of Figure 1.
Figure 3 shows a perspective view of a module of the modular system of Figure 1.
Figure 4 shows a perspective view of the stationary panel of the first shutter of the modular system of Figure 1.
Figure 5 shows a perspective view of the movable panel of the first shutter of the modular system of Figure 1.
Figure 6 shows a schematic depiction of an embodiment of the control unit of the modular system of Figure 1.
Figure 7 shows a sectional view of the flow distribution unit of the modular system of Figure 1 in which the first shutter is in the pass-through position and the second shutter is in the closed position.
Figure 8 shows a front view of the sectional view of Figure 7.
Figure 9 shows a sectional view of the flow distribution unit of the modular system of Figure 1 in which the first shutter is in the closed position and the second shutter is in the pass-through position.
Figure 10 shows a front view of the sectional view of Figure 9.

### DETAILED DISCLOSURE OF THE INVENTION

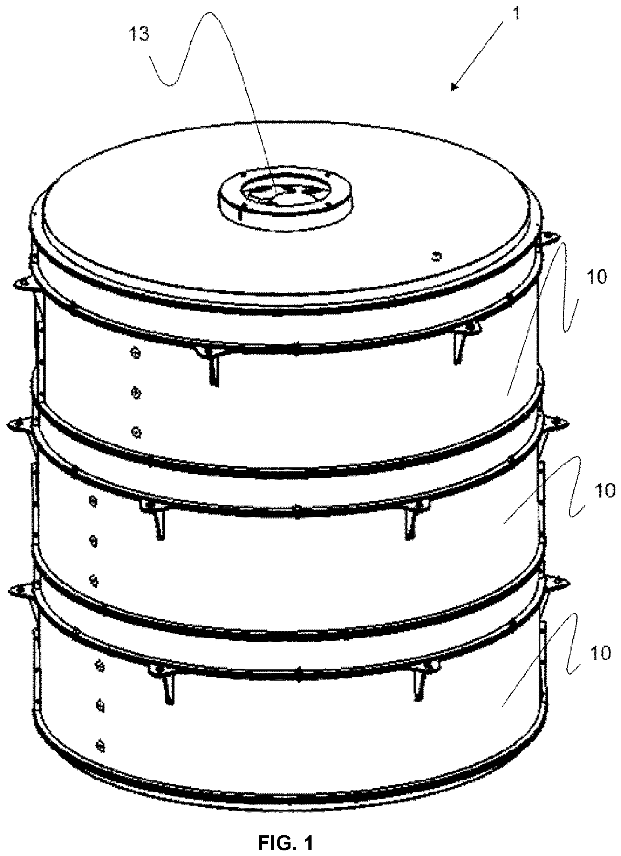

Figures 1 to 10 show a preferred embodiment of the modular thermal energy storage system 1 of the invention.

The modular thermal energy storage system 1 of the invention comprises a plurality of thermal energy storage modules 10 which are coupled to one another in series and configured for a heat transfer fluid to flow sequentially along said modules 10. Each module 10 has two operating modes, a first thermal energy transmission mode in which a transfer of thermal energy occurs between the heat transfer fluid and the module 10 when the heat transfer fluid flows along the module 10, and a second non-thermal energy transmission mode in which the transfer of thermal energy does not occur between the heat transfer fluid and the module 10 when the heat transfer fluid flows along said module 10.

Figure 1 shows the modular system 1 of the preferred embodiment of the invention, in which said modular system 1 has three modules 10.

The modular thermal energy storage system 1 operates in charge and discharge cycles. During a charge cycle, the heat transfer fluid, which is at a relatively high temperature, enters the modular system 1, a transfer of thermal energy occurring from the heat transfer fluid to those modules 10 which are operating in the first thermal energy transmission mode. However, during a discharge cycle, the heat transfer fluid, which is at a relatively low temperature, enters the modular system 1, a transfer of thermal energy occurring from those modules 10 which are operating in the first thermal energy transmission mode to the heat transfer fluid. The flow rate of heat transfer fluid during the charge cycle may not be the same as the flow rate of said heat transfer fluid in a discharge cycle, and in some applications said flow rate may vary over time, depending on factors such as the availability and the temperature of one or more external thermal energy sources, and thermal energy needs of the user, among others. In the context of this application, flow rate of the heat transfer fluid is understood to mean the amount of fluid circulating through a section of a conduit (pipe, pipeline, channel, etc.) per unit of time.

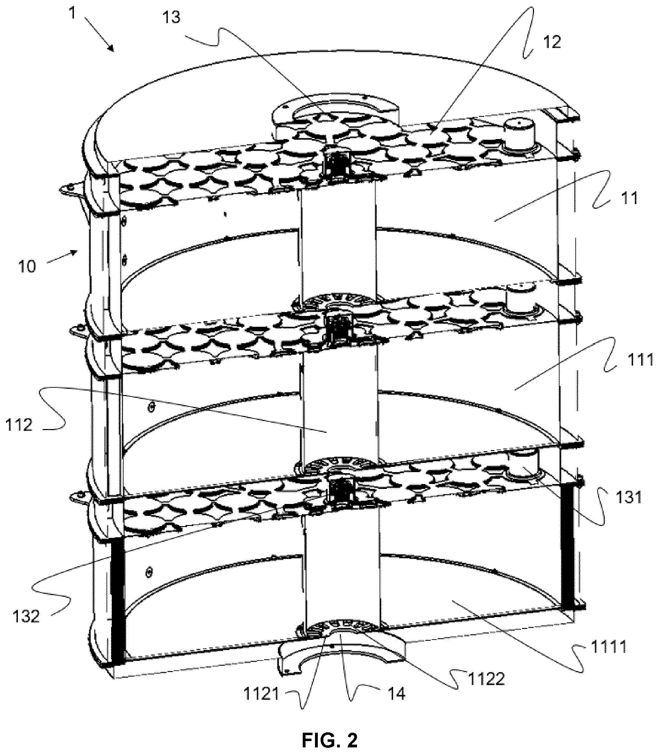

As can be seen in Figures 1 and 2, the modular system 1 has a first port 13 and a second port 14, such that in the charge cycles the first port 13 operates as an inlet port through which the heat transfer fluid enters the modular system 1, and the second port 14 operates as an outlet port through which said heat transfer fluid exits the modular system 1. In the discharge cycles, the heat transfer fluid flows along the modules 10 in the opposite direction as it does in the charge cycles, so that in the discharge cycles the second port 14 will operate as an inlet port and the first port 13 will operate as an outlet port.

The modules 10 of the modular system 1 are coupled to one another in series, i.e., when the heat transfer fluid exits one module 10, it enters the module 10 located after said module 10 in the series. In the case of modules 10 located at both ends of the series of the modular system 1, in a charge cycle, for example, the heat transfer fluid directly enters the module 10 located after the first port 13 through said first port 13 and exits the modular system 1 from the module 10 located next to the second port 14, through said second port 14.

The heat transfer fluid is a fluid configured for transporting heat from one place to another, for example, from an organic waste treatment plant in which thermal energy is produced, to the modular system 1. The heat transfer fluid is usually transported through a closed circuit by means of using, for example, a plurality of hydraulic pumps. The heat transfer fluid is heated in one part of the installation and releases the captured heat in another part, such that once part of the transported heat has been released, it restarts the cycle by returning, in the case of the preceding example, to the organic waste treatment plant to be heated again.

The heat transfer fluid preferably has a desirable combination of properties, including high thermal conductivity, low viscosity, high heat capacity, chemical stability and compatibility with other components of the system, low cost, high availability, and favorable environmental properties, such as low toxicity and low volatility.

The modular thermal energy storage system 1 of the invention can be adapted to the heat capacity of the heat transfer fluid at all times, thereby optimizing system efficiency. The greater the heat capacity of the heat transfer fluid, the larger the number of modules 10 through which said heat transfer fluid will flow in the first thermal energy transmission mode will be, and the lower the heat capacity of the heat transfer fluid, the smaller the number of modules 10 through which said heat transfer fluid will flow in the first thermal energy transmission mode will be. The modular thermal energy storage system 1 of the invention can also be adapted to the state of each of the modules 10, such that when a module 10 can no longer store more thermal energy, said module 10 will transition to the second non-thermal energy transmission mode, where another module 10 of the modular system 1 with the capacity to store more thermal energy can transition from the second non-thermal energy transmission mode to the first thermal energy transmission mode.

Furthermore, although the heat transfer fluid flows along all the modules 10 of the system, only those modules 10 which are operating in the first thermal energy transmission mode provide resistance against the passing through of said fluid, such that the pressure drop in the heat transfer fluid as it goes through the modular system 1 of the invention is lower than that offered by other modular thermal energy storage systems known in the state of the art.

By means of the modular system 1 of the invention, a thermal energy storage system which can be readily adapted to the desired capacity of stored thermal energy can furthermore be obtained, given that increasing the number of modules 10 of said modular system 1 is enough to enable increasing the storage capacity of the system.

In the modular system 1 of the invention, each module 10 of the modular thermal energy storage system 1 comprises a flow distribution unit 12 and a main body 11. The main body 11 comprises a thermal energy storage area 111 in which a thermal energy storage medium is housed, and a pass-through area 112 configured for allowing the heat transfer fluid to pass through the module 10 without thermal energy being transmitted between the heat transfer fluid and the module 10. The flow distribution unit 12 is configured for allowing the heat transfer fluid to pass through to the thermal energy storage area 111, the pass-through area 112, or both.

The thermal energy storage medium is configured for storing or releasing thermal energy when the heat transfer fluid flows through the thermal energy storage area 111. Three methods are available today for storing thermal energy: sensible heat storage, latent heat storage, and thermochemical energy storage. The modular system 1 of the invention is configured for storing thermal energy both by means of sensible heat storage and by means of latent heat storage. In the modular system 1 of the invention, the thermal energy storage medium is made of a material from those materials known as phase change materials or PCMs.

In one embodiment, the thermal energy storage medium comprises a plurality of thermal elements, such that there is a spacing between the thermal elements which allows the heat transfer fluid to flow between said thermal elements. In that sense, during charge cycles, the thermal energy of the heat transfer fluid is transferred to the thermal elements of the module 10, when said module 10 is operating in the first thermal energy transmission mode, and in discharge cycles, the thermal energy stored in the thermal elements of said module 10 is transferred to the heat transfer fluid. Said thermal elements may be in different forms, such as spheres, granules, tubes, etc.

In one embodiment, the thermal energy storage medium is in direct contact with the heat transfer fluid. However, in another embodiment, said storage medium is encapsulated in a different material, such that the heat transfer fluid is not in direct contact with said thermal energy storage medium. The material with which the encapsulating element is manufactured is preferably a material having high thermal conductivity.

In an embodiment of the modular system 1, the thermal elements are in the form of granules having a diameter of between 3 and 5 mm.

Figure 2 shows a sectional view of the preferred embodiment of the modular system 1 of the invention. When the heat transfer fluid enters a module 10 in a charge cycle, said heat transfer fluid first flows through the flow distribution unit 12, and then through the main body 11 of the module 10. If said module 10 is operating in the second non-thermal energy transmission mode, all of the heat transfer fluid is directed through the flow distribution unit 12 to the pass-through area 112 of said module 10. Given that said pass-through area 112 does not house any thermal energy storage medium, the heat transfer fluid flows along said pass-through area 112 without a transfer of thermal energy occurring between the heat transfer fluid and said module 10. However, when said module 10 is operating in the first thermal energy transmission mode, all or part of the heat transfer fluid is directed through the flow distribution unit 12 to the thermal energy storage area 111. When said heat transfer fluid flows through the storage area 111 and given that said storage area 111 houses thermal energy storage medium (not shown in the figures), a transfer of thermal energy occurs from the heat transfer fluid to said thermal energy storage medium. When the module 10 is operating in the first thermal energy transmission mode, the flow distribution unit 12 can direct all of the heat transfer fluid to the thermal energy storage area 111, so no heat transfer fluid would flow to the pass-through area 112, or part of said fluid, such that the heat transfer fluid is directed through the flow distribution unit 12 both to the thermal energy storage area 111 and to the pass-through area 112, such that the larger the amount of heat transfer fluid flowing to the storage area 111 with respect to the amount of heat transfer fluid flowing to the pass-through area 112, the greater the transfer of thermal energy from the heat transfer fluid to the thermal energy storage medium will be, and vice versa.

The existence of a flow distribution unit 12 in each module 10 makes the modular system 1 of the invention highly flexible and efficient, given that it can be readily adapted to the heat capacity of the heat transfer fluid at all times, where the number of modules 10 which are operating in the first thermal energy transmission mode can be regulated at all times, and where the operating mode of each module 10 can be changed as required, with a module 10 being able to transition from the first thermal energy transmission operating mode to the second non-thermal energy transmission operating mode when said module 10 can no longer store more thermal energy, and another module 10 being able to transition from the second non-thermal energy transmission operating mode to the first thermal energy transmission operating mode when said module 10 has the capacity to store more thermal energy.

Furthermore, the modular system 1 of the invention has the advantage that the installation needed for causing the heat transfer fluid to flow through the different modules 10, such that a transfer of thermal energy occurs between the heat transfer fluid and the module 10 in some of them, is integral with each module 10, such that adding more modules 10 to the modular system 1 is enough to increase the storage capacity of thermal energy of the modular system 1 without having to modify said installation for the heat transfer fluid.

In the modular system 1 of the invention, the flow distribution unit 12 comprises a first shutter 121 and a first actuator 131 configured for moving the first shutter 121 between a pass-through position in which the first shutter 121 allows the heat transfer fluid to pass through to the storage area 111 and a closed position in which the first shutter 121 prevents the heat transfer fluid from passing through to the storage area 111, and a second shutter 122 and a second actuator 132 which is configured for moving the second shutter 122 between a pass-through position in which the second shutter 122 allows the heat transfer fluid to pass through to the pass-through area 112 and a closed position in which the second shutter 122 prevents the heat transfer fluid from passing through to the pass-through area 112.

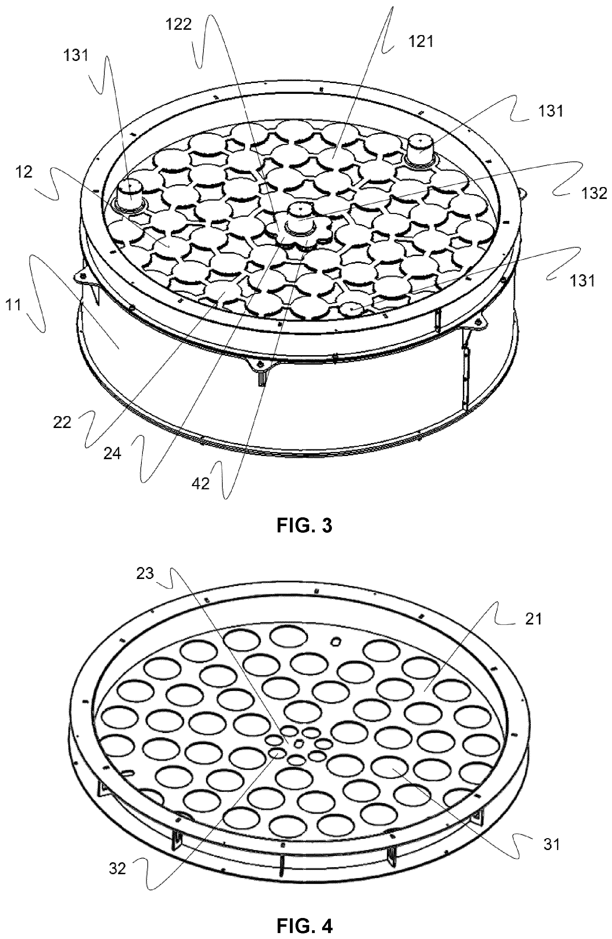

Figure 3 shows the preferred embodiment of the flow distribution unit 12 and the main body 11 of a module 10 of the modular system 1 of the invention. In this embodiment, the flow distribution unit 12 comprises three first actuators 131 and a single second actuator 132. In the embodiment shown in Figure 3, the three first actuators are configured for simultaneously moving the first shutter 121.

In the modular system 1 of the invention, the first shutter 121 and the second shutter 122 can be arranged, in addition to in the pass-through position and in the closed position, in intermediate positions between said pass-through position and said closed position, such that the first actuator 131 and the second actuator 132 can regulate the amount of heat transfer fluid passing through the first shutter 121 with respect to the amount of heat transfer fluid passing through the second shutter 122 during a predetermined period of time.

When the module 10 is operating in the first thermal energy transmission mode, the flow distribution unit 12 can direct all of the heat transfer fluid to the thermal energy storage area 111, so no heat transfer fluid would flow to the pass-through area 112, or part of said fluid, such that the heat transfer fluid is directed through the flow distribution unit 12 both to the thermal energy storage area 111 and to the pass-through area 112, such that the larger the amount of heat transfer fluid flowing to the thermal energy storage area 111, the greater the transfer of thermal energy will be from the heat transfer fluid to the thermal energy storage medium, and vice versa. Given that the first shutter 121 and the second shutter 122 can be arranged, in addition to in the pass-through position and in the closed position, in intermediate positions between said pass-through position and said closed position, the modular system 1 is even more flexible and efficient, given that it allows regulating not only which modules 10 should operate in the first thermal energy transmission mode, but also to what extent of thermal energy transmission each of said modules 10 operates. In other words, the amount of energy to be stored in each of the modules 10 can be regulated by means of the modular system 1 by regulating the amount of heat transfer fluid flowing both to the storage area 111 and to the pass-through area 112 during a period of time.

In a preferred embodiment of the modular system 1, the first shutter 121 comprises a stationary panel 21 and a movable panel 22, both panels 21, 22 being located one on top of the other, the stationary panel 21 comprising a plurality of holes 31 and the movable panel 22 comprising a plurality of shutter areas 41 facing the holes 31, such that when the first shutter 121 is in the closed position, the movable panel 22 is arranged supported on the stationary panel 21, the shutter areas 41 of the movable panel 22 shutting the holes 31 of the stationary panel 21, and when the first shutter 121 is in the pass-through position, the movable panel 22 is arranged separated from the stationary panel 21.

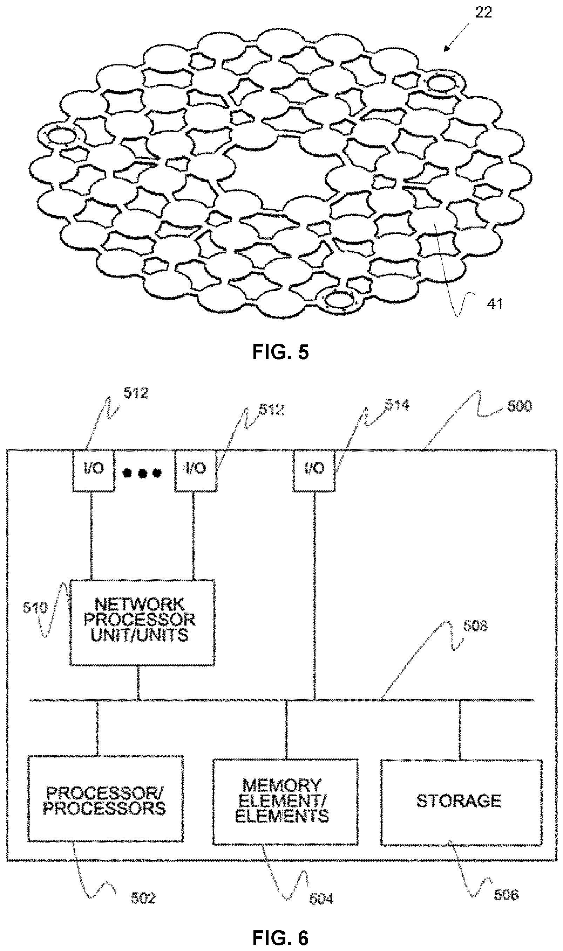

Figure 4 shows the preferred embodiment of the stationary panel 21 of the first shutter 121 and Figure 5 shows the preferred embodiment of the movable panel 22. In this embodiment, the stationary panel 21 is surrounded by a wall forming a kind of bowl between both. Figure 3 shows the preferred embodiment of the first shutter 121 in which the movable panel 22 is arranged on the stationary panel 21. In another embodiment, the arrangement may be different, where the stationary panel 21 can be arranged on the movable panel 22.

In a preferred embodiment of the modular system 1, the second shutter 122 comprises a stationary panel 23 and a movable panel 24, both panels 23, 24 being located one on top of the other, the stationary panel 23 comprising a plurality of holes 32 and the movable panel 24 comprising a plurality of shutter areas 42 facing the holes 32, such that when the second shutter 122 is in the closed position, the movable panel 24 is arranged supported on the stationary panel 23, the shutter areas 42 of the movable panel 24 shutting the holes 32 of the stationary panel 23, and when the second shutter 122 is in the pass-through position, the movable panel 24 is arranged separated from the stationary panel 23.

Figure 4 also shows the preferred embodiment of the stationary panel 23 of the second shutter 122, wherein the stationary panel 23 of the second shutter 122 and the stationary panel 21 of the first shutter 121 are integral and form a single panel between both. Figure 3 also shows the preferred embodiment of the second shutter 122 in which the movable panel 24 is arranged on the stationary panel 23. In another embodiment, the arrangement may be different, where the stationary panel 23 can be arranged on the movable panel 24.

In a preferred embodiment of the modular system 1, a sealing gasket 51 is arranged in each of the holes 31 of the stationary panel 21.

In a preferred embodiment of the modular system 1, a sealing gasket is arranged 52 in each of the holes 32 of the stationary panel 23.

In a preferred embodiment of the modular system 1, the first actuator 131 and the second actuator 132 are hydraulic actuators.

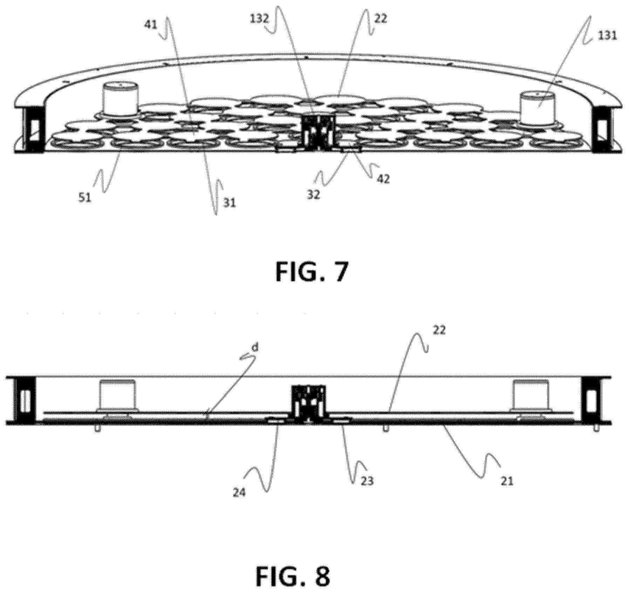

The operation of the flow distribution unit 12 of a module 10 of the preferred embodiment of the modular system 1 of the invention is shown by means of Figures 7, 8, 9, and 10.

Figures 7 and 8 show a sectional view of the flow distribution unit 12 of a module 10 of the modular system 1, in which the module 10 is in the first thermal energy transmission mode, such that when the heat transfer fluid flows through said module 10, a transfer of thermal energy occurs between the heat transfer fluid and the module 10. To that end, the first shutter 121 is in the pass-through position, allowing the heat transfer fluid to pass through to the storage area 111. As can be seen in both figures, the movable panel 22 is arranged on the stationary panel 21, said movable panel 22 being separated from said stationary panel 21 by a distance d. In said position, the actuator 131, which is a hydraulic actuator in this embodiment, is in its maximum advanced position. Due to said separation, a space is formed between each shutter area 41 of the movable panel 22 and the corresponding hole 31 of the stationary panel 21, allowing the heat transfer fluid to flow through the holes 31 of the stationary panel 21. In Figures 7 and 8, the second shutter 122 is in the closed position, preventing the heat transfer fluid from passing through to the pass-through area 112, so all of the heat transfer fluid flows to the storage area 111 of said module 10. In said closed position, the movable panel 24 is arranged supported on the stationary panel 23, such that there is no space between the movable panel 24 and the stationary panel 23, therefore preventing the heat transfer fluid from flowing to the pass-through area 112. In said position, each shutter area 42 completely covers the corresponding hole 32, closing the passage of the heat transfer fluid through said hole 32. In said position, the actuator 132, which is a hydraulic actuator in this embodiment, is in its retracted position. The sealing gasket 52 arranged in each of the holes 32 of the stationary panel 23 contributes to optimally closing the passage of the heat transfer fluid from the flow distribution unit 12 to the pass-through area 112.

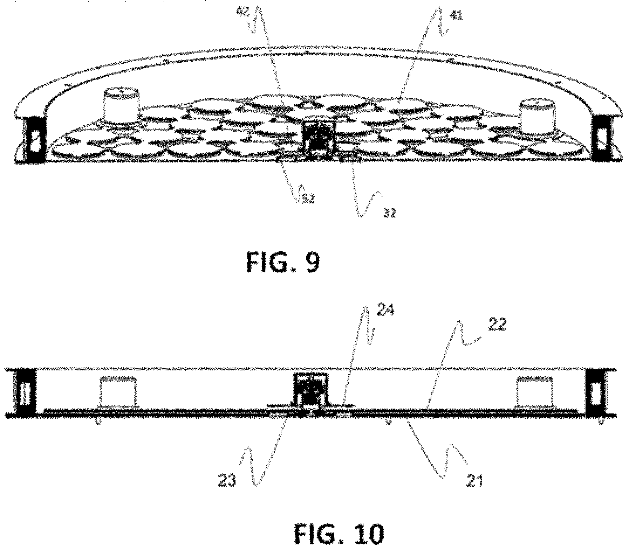

Figures 9 and 10 show a sectional view of the flow distribution unit 12 of a module 10 of the modular system 1, in which the module 10 is in the second non-thermal energy transmission mode, such that when the heat transfer fluid flows through said module 10 a transfer of thermal energy does not occur between the heat transfer fluid and the module 10. To that end, the second shutter 122 is in the pass-through position, allowing the heat transfer fluid to pass through to the pass-through area 112. As can be seen in both figures, the movable panel 24 is arranged on the stationary panel 23, said movable panel 24 being separated from said stationary panel 23 by a distance d. In said position, the actuator 132, which is a hydraulic actuator in this embodiment, is in its maximum advanced position. Due to said separation, a space is formed between each shutter area 42 of the movable panel 24 and the corresponding hole 32 of the stationary panel 23, allowing the heat transfer fluid to flow through the holes 32 of the stationary panel 23. In Figures 9 and 10, the first shutter 121 is in the closed position, preventing the heat transfer fluid from passing through to the storage area 111, so all of the heat transfer fluid flows to the pass-through area 112 of said module 10. In said closed position, the movable panel 22 is arranged supported on the stationary panel 21, such that there is no space between the movable panel 22 and the stationary panel 21, therefore preventing the heat transfer fluid from flowing to the storage area 111. In said position, each shutter area 41 completely covers the corresponding hole 31, closing the passage of the heat transfer fluid through said hole 31. In said position, the actuator 131, which is a hydraulic actuator in this embodiment, is in its retracted position. The sealing gasket 51 arranged in each of the holes 31 of the stationary panel 21 contributes to optimally closing the passage of the heat transfer fluid from the flow distribution unit 12 to the storage area 111.

When a module 10 of the modular system 1 is operating in the first thermal energy transmission mode, the modular system 1 allows both the first shutter 121 and the second shutter 122 to be in the pass-through position, allowing the heat transfer fluid to pass through both to the storage area 111 and to the pass-through area 112. Furthermore, the distance d separating the stationary panel 21 and the movable panel 22 can be a variable distance, given that the actuator 131, which is a hydraulic actuator in this embodiment, can be arranged in intermediate positions between the pass-through position in which the hydraulic actuator 131 is in its maximum advanced position, and the closed position in which it is in its retracted position. Similarly, the distance d separating the stationary panel 23 and the movable panel 24 can be a variable distance which furthermore does not have to coincide with the distance separating the stationary panel 21 and the movable panel 22 at a given time because the actuator 132, which is a hydraulic actuator in this embodiment, can be arranged in intermediate positions between the pass-through position in which the hydraulic actuator 132 is in its maximum advanced position, and the closed position in which it is in its retracted position.

In a preferred embodiment of the modular system 1, the storage area 111 is divided into a plurality of storage chambers, and the flow distribution unit 12 comprises a plurality of first shutters 121 and a plurality of first actuators 131, each first actuator 131 being configured for moving the corresponding first shutter 121 between a pass-through position in which the first shutter 121 allows the heat transfer fluid to pass through to the corresponding storage chamber 111 and a closed position in which the first shutter 121 prevents the heat transfer fluid from passing through to the corresponding storage chamber 111. In this embodiment, each first shutter 121 has associated therewith at least one first actuator 131 configured for moving said first shutter 121 between the pass-through position and the closed position. Therefore, the invention provides a very flexible modular system 1 which is capable of being adapted in a highly efficient manner to the heat capacity of the heat transfer fluid at all times.

In the preferred embodiment of the modular system 1 shown in Figure 2, the modules 10 are cylindrical, the main body 11 being a cylindrical body inside which the storage area 111 is arranged, and the pass-through area 112 of the main body 11 being a coaxial cylindrical conduit arranged in the center of said main body 11. In the embodiment shown in Figure 2, the pass-through area 112 has a circular base 1121 arranged at the end of the coaxial cylindrical conduit contiguous to the distribution unit 12 of the next module 10 in the series in the direction of movement of the heat transfer fluid in a charge cycle. In the embodiment shown in Figure 2, the circular base of the pass-through area 112 comprises a plurality of holes 1122 configured for allowing the passage of the heat transfer fluid between said pass-through area 112 and the distribution unit 12 of the next module 10 in the series, or in the case of the module contiguous to the second port 14, for allowing the passage of the heat transfer fluid between said pass-through area 112 and the second port 14. In the embodiment shown in Figure 2, the storage area 111 has a ring-shaped base 1111 arranged at the end of the cylindrical body contiguous to the distribution unit 12 of the next module 10 in the series in the direction of movement of the heat transfer fluid in a charge cycle. The ring-shaped base 1111 of the storage area 111 comprises a plurality of holes (not shown in the figures) configured for allowing the passage of the heat transfer fluid between said storage area 111 and the distribution unit 112 of the next module 10 in the series, or in the case of the module contiguous to the second port 14, for allowing the passage of the heat transfer fluid between said storage area 111 and the second port 14.

In a preferred embodiment, the modular system 1 comprises a control unit 500 communicated with a plurality of temperature sensors, at least one temperature sensor being configured for measuring the temperature of the heat transfer fluid before said heat transfer fluid flows through the modular system 1, and at least one temperature sensor in each module 10 being configured for measuring and transmitting to the control unit 500 the temperature of the thermal energy storage medium in said module 10. The control unit 500 is operatively communicated with each module 10. The control unit 500 is configured for selecting modules 10 that must operate in the first thermal energy transmission mode and those that must operate in the second non-thermal energy transmission mode and acting on each module 10 so that said module 10 operates in the previously selected mode.

The modular system 1 preferably comprises at least one temperature sensor configured for measuring and transmitting to the control unit 500 the temperature of the heat transfer fluid before said heat transfer fluid enters the modular system 1. Said temperature sensor can be arranged outside the modular system 1, close to the first port 13, or even in the first port 13. The modular system 1 preferably comprises at least one temperature sensor in each module 10, said temperature sensor being configured for measuring and transmitting to the control unit 500 the temperature of the thermal energy storage medium housed in said module 10, more specifically in the storage area 111 of said module 10. Depending on the temperatures received by the control unit 500, said control unit 500 is configured for selecting the modules 10 that must operate in the first thermal energy transmission mode and those that must operate in the second non-thermal energy transmission mode and acting on the flow distribution unit 12 of each module 10 so that said module 10 operates in the mode previously selected by the control unit 500. To that end, the control unit 500 is configured for acting on the first actuator 131 and the second actuator 132, with which said control unit 500 is operatively communicated.

Figure 6 shows a schematic depiction of an embodiment of the control unit 500. In said embodiment, the control unit 500 can include one or more processors 502, one or more memory elements 504, storage 506, a bus 508, one or more network processor units 510 interconnected with one or more network input/output (I/O) interfaces 512, one or more I/O interfaces 514, and control logic. In one embodiment, the control unit 500 receives the temperature from the temperature sensors through a plurality of I/O interfaces 514. In one embodiment, the control logic is stored in the storage 506 and may comprise instructions which, when implemented by the processor/processors 502, perform operations which can include, among others, interacting with the first actuator 131 and the second actuator 132.

In a preferred embodiment, the control unit 500 is communicated with at least one additional temperature sensor configured for measuring the temperature of the heat transfer fluid after said heat transfer fluid has flown through the modular system 1. The modular system 1 preferably comprises an additional temperature sensor configured for measuring and transmitting to the control unit 500 the temperature of the heat transfer fluid after said heat transfer fluid has flown through the modular system 1 and exited said modular system 1. In one embodiment, said additional temperature sensor can be arranged outside the modular system 1, close to the second port 14, or even in the second port 14. Depending on the temperature received by the control unit 500 from said additional temperature sensor, said control unit 500 is configured for selecting modules 10 that must operate in the first thermal energy transmission mode and those that must operate in the second non-thermal energy transmission mode, and acting on the flow distribution unit 12 of each module 10 so that said module 10 operates in the previously selected mode.

In a preferred embodiment of the modular system 1, the modular system 1 preferably comprises a flow sensor configured for measuring and transmitting to the control unit 500 the flow rate of the heat transfer fluid before said heat transfer fluid enters the modular system 1.

In a preferred embodiment, the modular system 1 preferably comprises an additional flow sensor configured for measuring and transmitting to the control unit 500 the flow rate of the heat transfer fluid after said heat transfer fluid has flown through the modular system 1 and exited said modular system 1.

In a preferred embodiment of the modular system 1, the control unit 500 is communicated with the flow sensor and the additional flow sensor. The control unit 500 is operatively communicated with at least one hydraulic pump configured for causing the heat transfer fluid to flow through the circuit. The control unit 500 is configured for acting on said hydraulic pump, such that the hydraulic pump causes the heat transfer fluid to flow through the circuit more quickly or more slowly.

If the required thermal energy storage capacity is very high, the modular system 1 is configured for being installed in series and/or in parallel with other modular systems 1, thereby obtaining an installation with a higher thermal energy storage capacity.

A second aspect of the invention relates to a thermal energy storage method for a modular thermal energy storage system 1 comprising a plurality of thermal energy storage modules 10, the modules 10 being coupled to one another in series and being configured for a heat transfer fluid to flow sequentially along said modules 10. In the method of the invention, an operating mode of each module 10 is selected from two possible operating modes, a first thermal energy transmission mode in which a transfer of thermal energy occurs between the heat transfer fluid and the module 10 when the heat transfer fluid flows along the module 10, and a second non-thermal energy transmission mode in which the transfer of thermal energy does not occur between the heat transfer fluid and the module 10 when the heat transfer fluid flows along said module 10.

In the modular system 1, each module 10 comprises a thermal energy storage medium configured for storing thermal energy when the heat transfer fluid flows through the module, when said module is operating in the first thermal energy transmission mode.

In a preferred embodiment, the modular system 1 preferably comprises a control unit 500, a temperature sensor configured for measuring the temperature of the heat transfer fluid before said heat transfer fluid flows through the modular system 1, and at least one temperature sensor in each module 10 configured for measuring and transmitting to the control unit 500 the temperature of the thermal energy storage medium in said module 10. The control unit 500 is communicated with the plurality of temperature sensors. The temperature sensor configured for measuring the temperature of the heat transfer fluid before said heat transfer fluid flows through the modular system 1 sends the temperature of the heat transfer fluid to the control unit 500. The temperature sensors configured for measuring the temperature of the thermal energy storage medium in each module 10 send the temperature of said medium to the control unit 500. Based on said received temperatures, the control unit 500 selects the modules 10 that must operate in the first thermal energy transmission mode and those that must operate in the second non-thermal energy transmission mode. The control unit 500 is operatively connected with the modules 10 and, after selecting the operating mode of each module 10, acts on each module 10 so that said module 10 operates in the previously selected mode.

Each module 10 comprises a flow distribution unit 12 and a main body 11, the main body 11 comprising a thermal energy storage area 111 which houses the thermal energy storage medium configured for storing thermal energy when the heat transfer fluid flows through said thermal energy storage area 111, and a pass-through area 112 configured for allowing the heat transfer fluid to pass through the module 10 without thermal energy being transmitted between the heat transfer fluid and the module 10, and the flow distribution unit 12 being configured for allowing the heat transfer fluid to pass through to the thermal energy storage area 111, the pass-through area 112, or both. The control unit 500 is operatively connected with the flow distribution unit 12 and, after selecting the operating mode of each module 10, acts on each flow distribution unit 12 so that said flow distribution unit 12 allows the heat transfer fluid to pass through to the thermal energy storage area 111, the pass-through area 112, or both.

In the modular system 1, the flow distribution unit 12 comprises a first shutter 121 and a first actuator 131 configured for moving the first shutter 121 between a pass-through position in which the first shutter 121 allows the heat transfer fluid to pass through to the storage area 111 and a closed position in which the first shutter 121 prevents the heat transfer fluid from passing through to the storage area 111, and a second shutter 122 and a second actuator 132 which is configured for moving the second shutter 122 between a pass-through position in which the second shutter 122 allows the heat transfer fluid to pass through to the pass-through area 112 and a closed position in which the second shutter 122 prevents the heat transfer fluid from passing through to the pass-through area 112. The control unit 500 is operatively connected with the first actuator 131 and the second actuator 132, such that after the control unit 500 selects the operating mode of each module 10, said control unit 500 acts on the first actuator 131 and the second actuator 132, such that said first actuator 131 and second actuator 132 move the first shutter 121 and the second shutter 122 to the corresponding position in each module 10, based on the operating mode previously selected for each module 10.

For each module 10 operating in the first thermal energy transmission mode, the amount of heat transfer fluid transferring thermal energy to the module 10 is selected in the method.

In the modular system 1, the first shutter 121 and the second shutter 122 can be arranged, in addition to in the pass-through position and in the closed position, in intermediate positions between said pass-through position and said closed position, such that the first actuator 131 and the second actuator 132 can regulate the amount of heat transfer fluid passing through the first shutter 121 and the amount of heat transfer fluid passing through the second shutter 122 at a given time. Once the operating mode of each module 10 has been selected, the control unit 500 acts on the first actuator 131 and the second actuator 132, where said first shutter 121 and said second shutter 122 can be arranged in intermediate positions between the pass-through position and the closed position, thereby regulating the amount of heat transfer fluid flowing through the storage area 111 and the amount of heat transfer fluid flowing through the pass-through area 112.

## Claims

1. Modular thermal energy storage system comprising a plurality of thermal energy storage modules (10), the modules (10) being coupled to one another in series and configured for a heat transfer fluid to flow sequentially along said modules (10), each module (10) having two operating modes, a first thermal energy transmission mode in which a transfer of thermal energy occurs between the heat transfer fluid and the module (10) when the heat transfer fluid flows along the module (10), and a second non-thermal energy transmission mode in which the transfer of thermal energy does not occur between the heat transfer fluid and the module (10) when the heat transfer fluid flows along said module (10), each module (10) comprising a flow distribution unit (12) and a main body (11), the main body (11) comprising a thermal energy storage area (111) in which a thermal energy storage medium is housed, and a pass-through area (112) configured for allowing the heat transfer fluid to pass through the module (10) without thermal energy being transmitted between the heat transfer fluid and the module (10), and the flow distribution unit (12) being configured for allowing the heat transfer fluid to pass through to the thermal energy storage area (111), the pass-through area (112), or both, **characterized in that** the flow distribution unit (12) comprises a first shutter (121) and a first actuator (131) configured for moving the first shutter (121) between a pass-through position in which the first shutter (121) allows the heat transfer fluid to pass through to the storage area (111) and a closed position in which the first shutter (121) prevents the heat transfer fluid from passing through to the storage area (111), and a second shutter (122) and a second actuator (132) which is configured for moving the second shutter (122) between a pass-through position in which the second shutter (122) allows the heat transfer fluid to pass through to the pass-through area (112) and a closed position in which the second shutter (122) prevents the heat transfer fluid from passing through to the pass-through area (112), wherein the first shutter (121) and the second shutter (122) can be arranged, in addition to in the pass-through position and in the closed position, in intermediate positions between said pass-through position and said closed position, such that the first actuator (131) and the second actuator (132) can regulate the amount of heat transfer fluid passing through the first shutter (121) with respect to the amount of heat transfer fluid passing through the second shutter (122) during a predetermined period of time, and wherein the thermal energy storage medium is made of a material from those materials known as phase change materials or PCMs.

2. Modular thermal energy storage system according to claim 1, wherein the first shutter (121) comprises a stationary panel (21) and a movable panel (22), both panels (21, 22) being located one on top of the other, the stationary panel (21) comprising a plurality of holes (31) and the movable panel (22) comprising a plurality of shutter areas (41) facing the holes (31), such that when the first shutter (121) is in the closed position, the movable panel (22) is arranged supported on the stationary panel (21), the shutter areas (41) of the movable panel (22) shutting the holes (31) of the stationary panel (21), and when the first shutter (121) is in the pass-through position, the movable panel (22) is arranged separated from the stationary panel (21).

3. Modular thermal energy storage system according to claim 2, wherein a sealing gasket (51) is arranged in each of the holes (31) of the stationary panel (21).

4. Modular thermal energy storage system according to any of the preceding claims, wherein the first actuator (131) and the second actuator (132) are hydraulic actuators.

5. Modular thermal energy storage system according to any of the preceding claims, wherein the storage area (111) is divided into a plurality of storage chambers, and wherein the flow distribution unit (12) comprises a plurality of first shutters (121) and a plurality of first actuators (131), each first actuator (131) being configured for moving the corresponding first shutter (121) between a pass-through position in which the first shutter (121) allows the heat transfer fluid to pass through to the corresponding storage chamber (111) and a closed position in which the first shutter (121) prevents the heat transfer fluid from passing through to the corresponding storage chamber (111).

6. Modular thermal energy storage system according to any of the preceding claims, wherein the modules (10) are cylindrical, the main body (11) being a cylindrical body inside which the storage area (111) is arranged, and the pass-through area (112) of the main body (11) being a coaxial cylindrical conduit arranged in the center of said main body (11).

7. Modular thermal energy storage system according to any of the preceding claims, comprising a control unit (500) communicated with a plurality of temperature sensors, at least one temperature sensor being configured for measuring the temperature of the heat transfer fluid before said heat transfer fluid flows through the modular system (1), and at least one temperature sensor in each module (10) being configured for measuring and transmitting to the control unit (500) the temperature of the thermal energy storage medium in said module (10), the control unit (500) being operatively communicated with each module (10), and the control unit (500) being configured for selecting the modules (10) that must operate in the first thermal energy transmission mode and the modules that must operate in the second non-thermal energy transmission mode, and acting on each module (10) so that said module (10) operates in the previously selected mode.

8. Modular thermal energy storage system according to claim 7, wherein the control unit (500) is communicated with at least one additional temperature sensor configured for measuring the temperature of the heat transfer fluid after said heat transfer fluid has flown through the modular system (1).

9. Thermal energy storage method using the modular thermal energy storage system (1) of claim 1 the method comprising selecting an operating mode of each module (10) from two possible operating modes, a first thermal energy transmission mode in which a transfer of thermal energy occurs between the heat transfer fluid and the module (10) when the heat transfer fluid flows along the module (10), and a second non-thermal energy transmission mode in which the transfer of thermal energy does not occur between the heat transfer fluid and the module (10) when the heat transfer fluid flows along said module (10), **characterized in that** for each module (10) operating in the first thermal energy transmission mode, the amount of heat transfer fluid transferring thermal energy to the module (10) is selected.

## Patentansprüche

1. Modulares thermisches Energiespeichersystem, umfassend eine Vielzahl von thermischen Energiespeichermodulen (10), wobei die Module (10) in Reihe miteinander gekoppelt und dazu konfiguriert sind, damit ein Wärmetransferfluid sequentiell entlang der Module (10) fließt, wobei jedes Modul (10) zwei Betriebsmodi aufweist, einen ersten thermischen Energieübertragungsmodus, in dem ein Transfer von thermischer Energie zwischen dem Wärmetransferfluid und dem Modul (10) stattfindet, wenn das Wärmetransferfluid entlang des Moduls (10) fließt, und einen zweiten nicht-thermischen Energieübertragungsmodus, in dem der Transfer von thermischer Energie zwischen dem Wärmetransferfluid und dem Modul (10) nicht stattfindet, wenn das Wärmetransferfluid entlang des Moduls (10) fließt, wobei jedes Modul (10) eine Flussverteilungseinheit (12) und einen Hauptkörper (11) umfasst, wobei der Hauptkörper (11) einen thermischen Energiespeicherbereich (111), in dem ein thermisches Energiespeichermedium aufgenommen ist, und einen Durchgangsbereich (112) umfasst, der dazu konfiguriert ist, es dem Wärmetransferfluid zu ermöglichen, durch das Modul (10) zu gelangen, ohne dass thermische Energie zwischen dem Wärmetransferfluid und dem Modul (10) übertragen wird, und wobei die Flussverteilungseinheit (12) dazu konfiguriert ist, es dem Wärmetransferfluid zu ermöglichen, zu dem thermischen Energiespeicherbereich (111), dem Durchgangsbereich (112) oder beiden zu gelangen, **dadurch gekennzeichnet, dass** die Flussverteilungseinheit (12) einen ersten Verschluss (121) und einen ersten Aktuator (131), der dazu konfiguriert ist, den ersten Verschluss (121) zwischen einer Durchgangsposition, in der der erste Verschluss (121) es dem Wärmetransferfluid ermöglicht, in den Speicherbereich (111) zu gelangen, und einer geschlossenen Position zu bewegen, in der der erste Verschluss (121) es dem Wärmetransferfluid verhindert, in den Speicherbereich (111) zu gelangen, und einen zweiten Verschluss (122) und einen zweiten Aktuator (132) umfasst, der dazu konfiguriert ist, den zweiten Verschluss (122) zwischen einer Durchgangsposition, in der der zweite Verschluss (122) es dem Wärmetransferfluid ermöglicht, in den Durchgangsbereich (112) zu gelangen, und einer geschlossenen Position zu bewegen, in der der zweite Verschluss (122) es dem Wärmetransferfluid verhindert, in den Durchgangsbereich (112) zu gelangen, wobei der erste Verschluss (121) und der zweite Verschluss (122) zusätzlich zu der Durchgangsposition und der geschlossenen Position in Zwischenpositionen zwischen der Durchgangsposition und der geschlossenen Position angeordnet werden können, sodass der erste Aktuator (131) und der zweite Aktuator (132) die Menge des Wärmetransferfluids, das durch den ersten Verschluss (121) gelangt, in Bezug auf die Menge des Wärmetransferfluids, das durch den zweiten Verschluss (122) gelangt, während einer vorbestimmten Zeitperiode regulieren können, und wobei das thermische Energiespeichermedium aus einem Material aus den Materialien besteht, die als Phasenwechselmaterialien oder PCMs bekannt sind.

2. Modulares thermisches Energiespeichersystem nach Anspruch 1, wobei der erste Verschluss (121) eine stationäre Platte (21) und eine bewegliche Platte (22) umfasst, wobei beide Platten (21, 22) übereinander angeordnet sind, wobei die stationäre Platte (21) eine Vielzahl von Löchern (31) umfasst und die bewegliche Platte (22) eine Vielzahl von Verschlussbereichen (41) umfasst, die den Löchern (31) zugewandt sind, sodass, wenn sich der erste Verschluss (121) in der geschlossenen Position befindet, die bewegliche Platte (22) so angeordnet ist, dass sie auf der stationären Platte (21) abgestützt ist, wobei die Verschlussbereiche (41) der beweglichen Platte (22) die Löcher (31) der stationären Platte (21) verschließen, und wenn sich der erste Verschluss (121) in der Durchgangsposition befindet, die bewegliche Platte (22) getrennt von der stationären Platte (21) angeordnet ist.

3. Modulares thermisches Energiespeichersystem nach Anspruch 2, wobei eine Versiegelungsdichtung (51) in jedem der Löcher (31) der stationären Platte (21) angeordnet ist.

4. Modulares thermisches Energiespeichersystem nach einem der vorhergehenden Ansprüche, wobei der erste Aktuator (131) und der zweite Aktuator (132) hydraulische Aktuatoren sind.

5. Modulares thermisches Energiespeichersystem nach einem der vorhergehenden Ansprüche, wobei der Speicherbereich (111) in eine Vielzahl von Speicherkammern unterteilt ist und wobei die Flussverteilungseinheit (12) eine Vielzahl von ersten Verschlüssen (121) und eine Vielzahl von ersten Aktuatoren (131) umfasst, wobei jeder erste Aktuator (131) dazu konfiguriert ist, den entsprechenden ersten Verschluss (121) zwischen einer Durchgangsposition, in der der erste Verschluss (121) es dem Wärmetransferfluid ermöglicht, zu der entsprechenden Speicherkammer (111) zu gelangen, und einer geschlossenen Position zu bewegen, in der der erste Verschluss (121) es dem Wärmetransferfluid verhindert, zu der entsprechenden Speicherkammer (111) zu gelangen.

6. Modulares thermisches Energiespeichersystem nach einem der vorhergehenden Ansprüche, wobei die Module (10) zylindrisch sind, wobei der Hauptkörper (11) ein zylindrischer Körper ist, in dessen Inneren der Speicherbereich (111) angeordnet ist, und wobei der Durchgangsbereich (112) des Hauptkörpers (11) ein koaxialer zylindrischer Kanal ist, der in der Mitte des Hauptkörpers (11) angeordnet ist.

7. Modulares thermisches Energiespeichersystem nach einem der vorhergehenden Ansprüche, umfassend eine Steuereinheit (500), die mit einer Vielzahl von Temperatursensoren kommuniziert, wobei mindestens ein Temperatursensor dazu konfiguriert ist, die Temperatur des Wärmetransferfluids zu messen, bevor das Wärmetransferfluid durch das modulare System (1) fließt, und wobei mindestens ein Temperatursensor in jedem Modul (10) dazu konfiguriert ist, die Temperatur des thermischen Energiespeichermediums in dem Modul (10) zu messen und an die Steuereinheit (500) zu übertragen, wobei die Steuereinheit (500) betriebsmäßig mit jedem Modul (10) kommuniziert, und wobei die Steuereinheit (500) dazu konfiguriert ist, die Module (10), die im ersten thermischen Energieübertragungsmodus betrieben werden müssen, und die Module, die im zweiten nicht-thermischen Energieübertragungsmodus betrieben werden müssen, auszuwählen, und auf jedes Modul (10) derart einzuwirken, dass das Modul (10) im zuvor ausgewählten Modus betrieben wird.

8. Modulares thermisches Energiespeichersystem nach Anspruch 7, wobei die Steuereinheit (500) mit mindestens einem zusätzlichen Temperatursensor kommuniziert, der dazu konfiguriert ist, die Temperatur des Wärmetransferfluids zu messen, nachdem das Wärmetransferfluid durch das modulare System (1) geflossen ist.

9. Thermisches Energiespeicherverfahren, das das modulare thermische Energiespeichersystem (1) nach Anspruch 1 verwendet, wobei das Verfahren das Auswählen eines Betriebsmodus jedes Moduls (10) aus zwei möglichen Betriebsmodi umfasst, einem ersten thermischen Energieübertragungsmodus, in dem ein Transfer von thermischer Energie zwischen dem Wärmetransferfluid und dem Modul (10) stattfindet, wenn das Wärmetransferfluid entlang des Moduls (10) fließt, und einem zweiten nicht-thermischen Energieübertragungsmodus, in dem der Transfer von thermischer Energie zwischen dem Wärmetransferfluid und dem Modul (10) nicht stattfindet, wenn das Wärmetransferfluid entlang des Moduls (10) fließt, **dadurch gekennzeichnet, dass** für jedes Modul (10), das im ersten thermischen Energieübertragungsmodus betrieben wird, die Menge des Wärmetransferfluids, das thermische Energie an das Modul (10) überträgt, ausgewählt wird.

## Revendications

1. Système de stockage d'énergie thermique modulaire comprenant une pluralité de modules de stockage d'énergie thermique (10), les modules (10) étant couplés les uns aux autres en série et configurés pour qu'un fluide de transfert thermique s'écoule séquentiellement le long desdits modules (10), chaque module (10) ayant deux modes de fonctionnement, un premier mode de transmission d'énergie thermique dans lequel se produit un transfert d'énergie thermique entre le fluide de transfert thermique et le module (10) lorsque le fluide de transfert thermique s'écoule le long du module (10), et un deuxième mode sans transmission d'énergie thermique dans lequel le transfert d'énergie thermique ne se produit pas entre le fluide de transfert thermique et le module (10) lorsque le fluide de transfert thermique s'écoule le long dudit module (10), chaque module (10) comprenant une unité de distribution de flux (12) et un corps principal (11), le corps principal (11) comprenant une zone de stockage d'énergie thermique (111) dans laquelle est logé un milieu de stockage d'énergie thermique, et une zone de passage (112) configurée pour permettre le passage du fluide de transfert thermique à travers le module (10) sans transmission d'énergie thermique entre le fluide de transfert thermique et le module (10), et l'unité de distribution de flux (12) étant configurée pour permettre le passage du fluide de transfert thermique jusqu'à la zone de stockage d'énergie thermique (111), la zone de passage (112), ou les deux, **caractérisé en ce que** l'unité de distribution de flux (12) comprend un premier obturateur (121) et un premier actionneur (131) configuré pour déplacer le premier obturateur (121) entre une position de passage dans laquelle le premier obturateur (121) permet le passage du fluide de transfert thermique jusqu'à la zone de stockage (111) et une position fermée dans laquelle le premier obturateur (121) empêche le passage du fluide de transfert thermique jusqu'à la zone de stockage (111), et un deuxième obturateur (122) et un deuxième actionneur (132) qui est configuré pour déplacer le deuxième obturateur (122) entre une position de passage dans laquelle le deuxième obturateur (122) permet le passage du fluide de transfert thermique jusqu'à la zone de passage (112) et une position fermée dans laquelle le deuxième obturateur (122) empêche le passage du fluide de transfert thermique jusqu'à la zone de passage (112), dans lequel le premier obturateur (121) et le deuxième obturateur (122) peuvent être disposés, en plus de la position de passage et la position fermée, dans des positions intermédiaires entre ladite position de passage et ladite position fermée, de sorte que le premier actionneur (131) et le deuxième actionneur (132) peuvent réguler la quantité de fluide de transfert thermique qui passe à travers le premier obturateur (121) par rapport à la quantité de fluide de transfert thermique qui passe à travers le deuxième obturateur (122) pendant une période de temps prédéterminé, et dans lequel le milieu de stockage d'énergie thermique est constitué d'un matériau parmi les matériaux connus comme des matériaux à changement de phase ou PCM.

2. Système de stockage d'énergie thermique modulaire selon la revendication 1, dans lequel le premier obturateur (121) comprend un panneau fixe (21) et un panneau mobile (22), les deux panels (21, 22) étant situés l'un au-dessus de l'autre, le panneau fixe (21) comprenant une pluralité d'orifices (31) et le panneau mobile (22) comprenant une pluralité de zones d'obturation (41) faisant face aux orifices (31), de sorte que lorsque le premier obturateur (121) se trouve dans la position fermée, le panneau mobile (22) est disposé supporté sur le panneau fixe (21), les zones d'obturation (41) du panneau mobile (22) obturant les orifices (31) du panneau fixe (21), et lorsque le premier obturateur (121) se trouve dans la position de passage, le panneau mobile (22) est disposé écarté du panneau fixe (21).

3. Système de stockage d'énergie thermique modulaire selon la revendication 2, dans lequel un joint d'étanchéité (51) est disposé dans chacun des orifices (31) du panneau fixe (21).

4. Système de stockage d'énergie thermique modulaire selon l'une quelconque des revendications précédentes, dans lequel le premier actionneur (131) et le deuxième actionneur (132) sont des actionneurs hydrauliques.

5. Système de stockage d'énergie thermique modulaire selon l'une quelconque des revendications précédentes, dans lequel la zone de stockage (111) est divisée en une pluralité de chambres de stockage, et dans lequel l'unité de distribution de flux (12) comprend une pluralité de premiers obturateurs (121) et une pluralité de premiers actionneurs (131), chaque premier actionneur (131) étant configuré pour déplacer le premier obturateur (121) correspondant entre une position de passage dans laquelle le premier obturateur (121) permet le passage du fluide de transfert thermique jusqu'à la chambre de stockage (111) correspondante et une position fermée dans laquelle le premier obturateur (121) empêche le passage du fluide de transfert thermique jusqu'à la chambre de stockage (111) correspondante.

6. Système de stockage d'énergie thermique modulaire selon l'une quelconque des revendications précédentes, dans lequel les modules (10) sont cylindriques, le corps principal (11) étant un corps cylindrique à l'intérieur duquel est disposée la zone de stockage (111), et la zone de passage (112) du corps principal (11) étant un conduit cylindrique coaxial disposé au centre dudit corps principal (11).

7. Système de stockage d'énergie thermique modulaire selon l'une quelconque des revendications précédentes, comprenant une unité de contrôle (500) en communication avec une pluralité de capteurs de température, au moins un capteur de température étant configuré pour mesurer la température du fluide de transfert thermique avant que ledit fluide de transfert thermique ne s'écoule +a travers le système modulaire (1), et au moins un capteur de température dans chaque module (10) étant configuré pour mesurer et transmettre à l'unité de contrôle (500) la température du milieu de stockage d'énergie thermique dans ledit module (10), l'unité de contrôle (500) étant opérationnellement en communication avec chaque module (10), et l'unité de contrôle (500) étant configurée pour sélectionner les modules (10) qui doivent fonctionner dans le premier mode de transmission d'énergie thermique et les modules qui doivent fonctionner dans le deuxième mode sans transmission d'énergie thermique, et agir sur chaque module (10) de sorte que ledit module (10) fonctionne dans le mode sélectionné précédemment.

8. Système de stockage d'énergie thermique modulaire selon la revendication 7, dans lequel l'unité de contrôle (500) est en communication avec au moins un capteur de température additionnel configuré pour mesurer la température du fluide de transfert thermique après que le fluide de transfert thermique s'est écoulé à travers le système modulaire (1).

9. Procédé de stockage d'énergie thermique utilisant le système de stockage d'énergie thermique modulaire (1) selon la revendication 1, le procédé comprenant sélectionner un mode de fonctionnement de chaque module (10) parmi deux modes de fonctionnement possibles, un premier mode de transmission d'énergie thermique dans lequel se produit un transfert d'énergie thermique entre le fluide de transfert thermique et le module (10) lorsque le fluide de transfert thermique s'écoule le long du module (10), et un deuxième mode sans transmission d'énergie thermique dans lequel le transfert de énergie thermique ne se produit pas entre le fluide de transfert thermique et le module (10) lorsque le fluide de transfert thermique s'écoule le long dudit module (10), **caractérisé en ce que,** pour chaque module (10) fonctionnant dans le premier mode de transmission d'énergie thermique, la quantité de fluide de transfert thermique transférant de l'énergie thermique vers le module (10) est sélectionnée.
